# FASCICULE DE BREVET EUROPEEN

(11) **EP 2 884 716 B1**
(45) Date de publication et mention de la délivrance du brevet: **15.05.2024**
(21) Numéro de dépôt: 14197027.7
(22) Date de dépôt: 09.12.2014
(51) Int. Cl.: H04L 9/40

(54) **MÉCANISME D'AUTHENTIFICAITON PAR JETON**
AUTHENTIFIZIERUNGSMECHANISMUS ÜBER JETON
TOKEN-BASED AUTHENTICATION MECHANISM

(30) Priorité: 12.12.2013 FR 1362496
(43) Date de publication de la demande: 17.06.2015
(73) Titulaire: Orange, 92130 Issy-les-Moulineaux (FR)
(72) Inventeur: Omnes, Nathalie, 22560 Trebeurden (FR); Loras, Frédéric, 78000 Versailles (FR); Belin, Pascal, 78670 Villennes Sur Seine (FR); Huet, Gérald, 22560 Trebeurden (FR)

(56) Documents cités:
- US-A1- 2008 242 264
- US-A1- 2013 252 583

## Description

### DOMAINE TECHNIQUE

L'invention se rapporte au domaine de l'authentification pour l'accès à un service et concerne plus particulièrement un système pour authentifier conjointement un utilisateur et un terminal pour la consultation de contenus multimédias.

### ART ANTÉRIEUR

L'arrivée massive de terminaux connectés révolutionne aujourd'hui la consommation de contenus audiovisuels. La plupart des équipements multimédias connectés, comme par exemple les TV connectées, consoles de jeu, ordinateurs personnels, tablettes ou encore les smartphones, permettent l'accès à des contenus en ligne. Les utilisateurs peuvent ainsi consulter leurs contenus à partir de différents terminaux mais aussi à partir de différents réseaux d'accès (réseau domestique, hotspots WiFi, réseau de téléphonie mobile d'un opérateur tiers...). Une tablette permet par exemple d'accéder à de nombreux univers de consommation de contenus depuis n'importe quel point d'accès WiFi. Afin de tirer parti de ces nouveaux usages, les services de contenus proposés par les acteurs du marché sont en cours d'évolution.

Si la possibilité de consulter ses contenus depuis différents terminaux et à partir de différents points d'accès constitue un avantage évident pour le client, elle s'accompagne de nouvelles exigences imposées par les ayants-droit. Dans un souci de maintenir la valeur de leurs contenus, ils émettent des exigences pour limiter le partage d'un abonnement ou d'un achat au sein d'un même foyer. Ces exigences doivent permettre la consultation des contenus à partir de plusieurs terminaux tout en s'assurant que seuls les utilisateurs ayant souscrit puissent effectivement consommer les contenus. Une limite est souvent fixée à 5 terminaux différents au maximum par foyer, avec au maximum un ajout / retrait de terminal par mois.

Aujourd'hui, pour répondre aux exigences des ayants-droits, les acteurs OTT (Over The Top) maintiennent généralement une liste des terminaux autorisés pour un utilisateur ou un foyer. Une autorisation est accordée sur la base d'un identifiant unique du terminal, comme par exemple une adresse MAC (Media Access Control). Les utilisateurs peuvent ainsi ajouter ou retirer des terminaux de la liste des terminaux autorisés, par exemple suite à la perte d'un de leur terminal ou lors de l'acquisition d'un nouvel équipement. L'accès à cette liste est généralement protégé par un simple mot de passe. Or, celui-ci pouvant facilement être partagé avec des personnes extérieures au foyer, les ayants-droits ne peuvent avoir la garantie que le partage de l'abonnement est limité à ses seuls membres. En effet, il n'existe pas de lien entre le foyer et les terminaux enregistrés. On peut également noter que la gestion des autorisations par l'utilisateur est un frein à une expérience fluide et efficace, et qu'elle requiert de la part des opérateurs de services la mise en oeuvre de systèmes complexes et d'une chaine de support couteuse.

La demande US 2008/242264 A1 propose un système pour authentifier un terminal selon un type d'accès réseau dans le cadre d'un attachement de service, sur la base d'une part d'un identifiant matériel du terminal, et d'autre part d'un mode d'accès au réseau. Cependant, le système ne propose pas de vérification des droits associé au titulaire de l'accès ni de solution quant à la limitation du nombre de terminaux autorisés à accéder à un service de contenu ni à la limitation du nombre d'ajout/retrait de terminaux sur une période donnée, et n'est donc pas utile pour répondre aux nouvelles exigences des ayants-droits dans le cadre de la consultation de contenus sur différents terminaux.

La demande US 2013/252583 A1 propose pour sa part une solution d'authentification par jeton adaptée pour accorder des droits d'accès à certains services en fonction de la localisation géographique du terminal au moment de l'accès. Différents niveaux d'accès sont ainsi accordés selon la position géographique du terminal, en fonction d'une information de positionnement incluse dans un jeton d'authentification, et donc n'est pas utilisable en situation de nomadisme (c'est-à-dire quelle que soit la position géographique du terminal) et ne permet pas non plus d'authentifier l'utilisateur du terminal conjointement à son terminal.

Il existe donc un besoin pour sécuriser l'accès à un contenu numérique en identifiant un terminal conjointement à un utilisateur, de façon à garantir que seuls les utilisateurs membres d'un même foyer puissent accéder aux contenus à partir d'un certain nombre de terminaux déclarés.

### EXPOSÉ DE L'INVENTION

À cet effet, la présente invention améliore la situation.

Un premier aspect de la présente invention propose un procédé d'authentification par jeton pour l'accès à un service à partir d'un terminal, tel qu'il comporte, à la réception d'une requête d'autorisation d'accès au service comprenant au moins un identifiant unique du terminal, les étapes suivantes :
- Détermination d'un contexte d'accès au réseau du terminal, ledit contexte d'accès se rapportant à une donnée relative au réseau d'accès utilisé par le terminal, la donnée étant adaptée pour identifier un utilisateur associé à l'accès,
- Contrôle de la validité des droits d'accès au service, comportant au moins une vérification de droit d'accès associé au contexte d'accès au réseau du terminal, et de:
   - Détermination d'un nombre de jetons valides associés au contexte d'accès réseau,
   - Comparaison du nombre de jetons associés au contexte d'accès réseau avec un nombre maximum prédéterminé de jetons, et
   - Détermination de la validité des droits en fonction du résultat de la comparaison, et
En cas de validité des droits d'accès :
- Génération d'un jeton d'authentification valide à partir de l'identifiant unique du terminal et du contexte d'accès au réseau, et
- Transmission du jeton du dispositif d'authentification (500) vers le terminal.

Dans la suite de cet exposé, il faut entendre par les termes « contenu numérique » tout type de données numériques correspondant à un contenu ou à un ensemble de contenus qui peuvent être transmis dans un réseau considéré sous la forme d'un flux de données. On peut notamment citer des données relatives à un document ou encore des données de type image ou de type son ou encore de type vidéo, ou de manière générale des données de type multimédia.

On entend ici par le terme « jeton » une donnée qui permet, à un terminal qui la détient, un accès à un équipement réseau qui est en mesure de valider ce jeton. Son utilisation permet de sécuriser l'accès à un réseau en certifiant la validité d'une requête d'accès. Aucune limitation n'est attachée à la nature d'un jeton. Il est ici associé à un identifiant unique et peut donc correspondre par exemple à une signature de l'identifiant unique auquel il est associé ou encore à un chiffrement de cet identifiant. Il faut ici noter que le jeton est généré de manière à ce qu'il soit impossible de déduire l'identifiant unique à partir du jeton. Il est en revanche possible de démontrer qu'un jeton a bien été généré à partir d'un identifiant unique donné. Une fois généré, le jeton peut être fourni au terminal auquel il est associé afin que ce dernier puisse le fournir comme preuve d'authentification dans des requêtes subséquentes.

Dans le contexte de cet invention, l'identifiant unique d'un terminal est un identifiant du terminal obtenu par exemple à partir d'éléments physiques le composant.. Par exemple, une adresse MAC (Media Access Control) est un identifiant physique stocké dans une interface réseau qui peut être utilisé comme identifiant unique d'un terminal. De nombreux autres identifiants peuvent être utilisés pour mettre en oeuvre la présente invention, comme par exemple le numéro de série d'une carte mère. Un identifiant unique peut également correspondre à un identifiant logiciel stocké dans une mémoire ou obtenu par l'exécution d'un algorithme propre au terminal. De manière générale, tout identifiant permettant d'identifier le terminal de manière non ambiguë peut être utilisé comme identifiant unique de ce terminal.

Dans la suite de cet exposé, le « contexte d'accès au réseau » désigne une information relative au réseau d'accès utilisé par le terminal pour se connecter au réseau. En particulier, l'information de contexte d'accès réseau permet à un opérateur de distinguer un accès à partir duquel il est possible d'identifier un utilisateur ou un groupe d'utilisateurs de manière implicite, comme par exemple un accès résidentiel, un accès mobile ou un accès WIFI avec identification par une carte SIM (Subscriber Identity Module), d'un accès nomade à partir duquel on ne peut pas déduire l'identité de l'utilisateur de manière implicite, comme un point d'accès WIFI public ou un réseau d'opérateur tiers par exemple. Par exemple, l'information de « contexte d'accès réseau » permet de distinguer un accès à un service depuis une connexion internet résidentielle d'un accès à ce même service depuis une connexion internet publique. Cette donnée peut être obtenue par exemple à partir de l'adresse IP (Internet Protocole) attribuée par un opérateur, ou bien lors de la phase d'attachement du terminal à un réseau, ou encore à partir des informations contenues dans une carte SIM ou plus généralement à partir de tout moyen permettant d'identifier un utilisateur ou un groupe d'utilisateur de manière implicite par l'accès réseau utilisé.

Ainsi, selon le premier aspect de la présente invention, il est possible d'identifier conjointement et de manière implicite un terminal et un utilisateur ou un groupe d'utilisateurs pour générer un jeton d'authentification autorisant l'accès à un service depuis un terminal. Il convient de noter que le jeton ayant été généré de manière associée à l'identifiant unique du terminal, il ne peut être utilisé que par celui-ci. En effet, dans les requêtes ultérieures d'accès au service, le terminal doit fournir son identifiant unique et son jeton. Il est alors possible pour une entité chargée de valider le jeton de contrôler la cohérence du jeton avec l'identifiant unique fourni dans la requête. Ceci apporte une garantie quant à la possibilité d'une pratique frauduleuse qui consisterait à capter un jeton généré pour un terminal afin de le réutiliser à partir d'un autre terminal. D'autre part, une sécurité supplémentaire est apportée par le fait que le jeton ne peut être généré que lorsqu'un terminal utilise un accès réseau à partir duquel l'utilisateur est identifié de manière implicite, par exemple par un composant du réseau de l'opérateur. Le procédé apporte alors la double garantie que seul un utilisateur ou un groupe d'utilisateur disposant des droits d'accès à un service peut effectivement y accéder et qu'il peut y accéder uniquement à partir d'un terminal utilisé pour la génération du jeton. Selon un deuxième aspect de la présente invention, le procédé est tel qu'il comporte en outre, lors de la détermination de la validité des droits d'accès au service, des étapes de détermination d'un nombre de jetons valides associés au contexte d'accès réseau, de comparaison du nombre de jetons associés au contexte d'accès réseau avec un nombre maximum prédéterminé de jetons, et de détermination de la validité des droits en fonction du résultat de la comparaison.

L'invention propose ainsi de contrôler le nombre de jetons générés pour un contexte d'accès réseau donné, de façon à limiter par exemple le nombre de terminaux à partir desquels il est possible pour un utilisateur ou un groupe d'utilisateur d'accéder à un service. Pour qu'un utilisateur puisse obtenir un jeton d'authentification valide permettant d'accéder au service à partir d'un nouveau terminal il est alors nécessaire qu'un nouveau jeton soit généré pour ce terminal, à partir de l'identifiant unique correspondant, qu'il accède au service depuis son propre accès réseau et que le nombre de jetons valides associés à cet accès réseau soit inférieur à un seuil maximum prédéterminé.

Selon un mode de réalisation particulier, le procédé est tel qu'il comporte en outre, lors du contrôle de la validité des droits d'accès au service et lorsque le nombre de jetons valides associés au contexte d'accès réseau est supérieur au nombre maximum prédéterminé de jetons, une étape de révocation d'au moins un jeton valide.

Dès lors, un nouveau terminal peut toujours obtenir un jeton d'accès au service qui soit associé à son identifiant unique s'il utilise un accès autorisé. En effet, lorsque le nombre de jetons maximum associé à un contexte d'accès réseau est atteint et qu'il est pourtant nécessaire de générer un jeton pour un nouveau terminal, un jeton valide peut être révoqué. Ainsi, le nombre maximum de jetons associés à un contexte d'accès réseau n'est jamais dépassé. Le choix du jeton à révoquer peut se faire suivant différents critères. Par exemple, un serveur d'authentification peut comptabiliser le nombre d'utilisation des jetons de façon à révoquer le jeton le moins souvent utilisé. Le choix peut également se porter sur le jeton le plus ancien selon une logique FIFO (First In First Out) ou encore par exemple sur le jeton correspondant à la date d'utilisation la plus ancienne. Lorsque le type des terminaux pour lesquels les jetons sont générés est connu, d'autres critères peuvent être appliqués de façon à privilégier certains types ou certaines catégories de terminaux. Ainsi, par exemple, un jeton associé à un type de terminal particulier peut ne pas être révoqué. Il est également possible d'interroger l'utilisateur sur le terminal à révoquer.

Selon un autre mode de réalisation, le procédé est tel que, lorsque le nombre de révocations dans une fenêtre temporelle prédéterminée est supérieur à un seuil prédéterminé, l'étape de révocation du jeton n'est pas effectuée et les droits d'accès au service pour le terminal sont invalidés.

Le procédé permet ainsi de limiter la fréquence avec laquelle un utilisateur peut accéder au service à partir d'un terminal ne disposant pas de jeton valide lorsque le nombre maximum de jetons à été généré pour un contexte d'accès donné. L'entité chargée de la génération du jeton, par exemple un serveur d'authentification, peut mémoriser la date de génération de chacun des jetons générés pour un contexte accès particulier. L'entité peut alors comptabiliser le nombre de jetons qui ont été générés au cours d'une période donnée, par exemple au cours des 4 semaines qui précèdent une demande de génération d'un jeton pour un nouveau terminal, et ainsi déterminer si la génération d'un nouveau jeton est autorisée ou non. Lorsque la génération est autorisée, un jeton valide est révoqué de façon à ne pas dépasser le maximum de jetons associés au contexte d'accès réseau. Selon un autre mode de réalisation de l'invention, le procédé est tel que, à la réception d'une requête d'accès à un service comportant un premier identifiant unique du terminal et un jeton d'authentification associé à un second identifiant unique du terminal, le procédé comporte en outre des étapes de comparaison du premier et du second identifiant unique du terminal, de détermination de la validité du jeton en fonction du résultat de la comparaison et d'autorisation d'accès au service demandé en cas de validité du jeton.

Lorsqu'un jeton a été indiqué à un terminal suite à la réception, par une entité d'authentification mettant en oeuvre la présente invention, d'une requête d'accès au service en provenance de ce terminal et ne disposant pas de jeton d'authentification, le terminal peut utiliser ce jeton en complément de son identifiant unique dans des requêtes subséquentes. Lors de la réception d'une telle requête, une entité mettant en oeuvre l'invention peut alors contrôler la validité du jeton indiqué par le terminal. Pour cela, l'entité d'authentification peut vérifier que l'identifiant unique du terminal correspond bien à celui qui a été utilisé pour générer le jeton, de façon à mettre en échec une tentative de fraude qui consisterait à utiliser ce même jeton à partir d'un terminal n'en disposant pas. S'il y a concordance entre l'identifiant unique contenu dans la requête et celui utilisé pour générer le jeton, le jeton est considéré comme valide et l'autorisation d'accéder au service peut être accordée au terminal. On peut noter que lorsqu'un jeton valide est indiqué dans une requête émanant d'un terminal autorisé, il n'est pas nécessaire que l'accès au service se fasse depuis un accès réseau particulier. Ainsi, dès lors qu'un utilisateur muni d'un nouveau terminal accède au service une première fois depuis un accès réseau permettant une authentification implicite, par exemple depuis son domicile, depuis un réseau mobile ou depuis un réseau WIFI avec une authentification basé sur une carte SIM, il peut accéder au service ultérieurement depuis tout accès réseau, y compris des points d'accès publics ou encore par l'intermédiaire d'un réseau cellulaire d'opérateur tiers.

Selon un autre mode de réalisation, le procédé est tel que la détermination de la validité du jeton comprend en outre une vérification que la date de génération du jeton est comprise dans une fenêtre temporelle prédéterminée.

Il est ainsi possible de limiter dans le temps la validité d'un jeton. Par exemple, une entité d'authentification mettant en oeuvre l'invention peut prévoir pour un jeton une durée de validité de 2 mois à compter de sa date de génération. La date de génération peut également correspondre à une date de re-génération lorsque le jeton est mis à jour suite à une connexion depuis un point d'accès permettant une authentification implicite par le réseau, c'est-à-dire lorsque l'information de contexte d'accès réseau permet la validation du droit d'accès. Lorsqu'elle reçoit une requête d'accès à un service en provenance d'un terminal, l'entité d'authentification peut contrôler que la date de génération de ce jeton est bien comprise dans la période de deux mois précédant la réception du jeton et le révoquer lorsque la période de validité a expiré. Un utilisateur doit alors obtenir un nouveau jeton pour le terminal, en formulant une demande d'accès à partir d'un accès réseau autorisé, comme par exemple l'accès réseau de son domicile. De cette façon, le procédé permet de garantir que seuls des utilisateurs qui fréquentent régulièrement un point d'accès autorisé, par exemple les membres d'un foyer disposant d'un accès internet, peuvent accéder au service. Le procédé permet alors de limiter une pratique frauduleuse qui consisterait à céder des autorisations d'accès à un service à partir de terminaux appartenant à des tiers.

Dans un autre mode de réalisation, le procédé est tel qu'il comporte en outre, lors de la détermination de la validité du jeton, des étapes de comparaison d'un nombre d'autorisations accordées compris dans le jeton et d'un nombre d'autorisations accordées associé au jeton, de détermination de la validité du jeton en fonction du résultat de la comparaison et, en cas de validité du jeton, de mise à jour du nombre d'autorisations accordées associé au jeton, de mise à jour du nombre d'autorisations accordées compris dans le jeton, et de transmission du jeton mis à jour au terminal.

Un compteur d'utilisation du jeton est ainsi maintenu sur l'entité d'authentification et dans le jeton lui-même. Lorsqu'un jeton a été validé, le compteur compris dans le jeton ainsi que le compteur maintenu par l'entité d'authentification sont incrémentés. Pour qu'un jeton soit considéré valide, il faut alors que le compteur compris dans le jeton et celui qui lui est associé sur l'entité d'authentification indiquent le même nombre d'utilisations. De cette façon, le procédé selon l'invention peut garantir qu'un jeton ne pourra être utilisé qu'une seule fois à chaque mise à jour et prévient certaines attaques qui consisteraient à capter une requête d'accès au service comprenant un jeton et un identifiant unique de terminal associé afin de la réémettre à partir d'un terminal non autorisé.

Selon un mode de réalisation particulier, le procédé est tel que l'étape de détermination d'un contexte d'accès au réseau du terminal comporte une étape d'identification d'un titulaire associé à l'accès réseau utilisé par le terminal.

Le titulaire associé à l'accès réseau peut par exemple être identifié en effectuant une recherche dans une base de données à partir de l'adresse IP (Internet Protocol) attribuée au terminal lors de sa connexion au réseau. Il est alors possible de déterminer par exemple les services souscrits par le titulaire de l'accès afin d'en déterminer les droits d'accès. Cette identification par l'accès apporte une garantie quant à l'identité de l'utilisateur, et simplifie l'usage du point de vue de l'utilisateur qui n'a pas d'identifiant à saisir pour se connecter.

L'invention concerne également un dispositif d'authentification par jeton pour l'accès à un service à partir d'un terminal, caractérisé en ce qu'il comprend des moyens de :
- Réception d'une requête d'autorisation d'accès au service comprenant au moins un identifiant unique du terminal,
- Détermination d'un contexte d'accès au réseau du terminal, ledit contexte d'accès se rapportant à une donnée relative au réseau d'accès utilisé par le terminal, la donnée étant adaptée pour identifier un utilisateur associé à l'accès
- Contrôle de la validité des droits d'accès au service, comportant au moins des moyens de vérification de droit d'accès associé au contexte d'accès au réseau du terminal, et de:
   - Détermination d'un nombre de jetons valides associés au contexte d'accès réseau,
   - Comparaison du nombre de jetons associés au contexte d'accès réseau avec un nombre maximum prédéterminé de jetons, et
   - Détermination de la validité des droits en fonction du résultat de la comparaison, et
- Génération d'un jeton d'authentification valide à partir de l'identifiant unique du terminal et du contexte d'accès au réseau, et
- Transmission du jeton vers le terminal.

L'invention concerne également un serveur d'authentification comprenant un dispositif d'authentification par jeton tel que décrit ci-dessus.

L'invention concerne également un programme d'ordinateur comportant les instructions pour l'exécution du procédé d'authentification par jeton tel que décrit ci-dessus, lorsque le programme est exécuté par un processeur.

Enfin, l'invention concerne un support d'informations lisible par un ordinateur sur lequel est enregistré un programme d'ordinateur comprenant des instructions pour l'exécution des étapes du procédé d'authentification par jeton tel que décrit ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

Selon un autre aspect, l'invention concerne un procédé d'accès à un service tel qu'il comporte des étapes d'obtention d'un identifiant unique du terminal ; d'émission d'une requête d'accès au service comprenant l'identifiant unique ; de réception d'un jeton d'authentification généré à partir de l'identifiant unique du terminal et d'un contexte d'accès au réseau, ledit contexte d'accès se rapportant à une donnée relative au réseau d'accès utilisé par le terminal, la donnée étant adaptée pour identifier un utilisateur associé à l'accès, et d'émission d'une requête d'accès au service comprenant l'identifiant unique du terminal et le jeton d'authentification.

Les serveurs, dispositifs et programmes présentent des avantages analogues à ceux du procédé correspondant décrit ci-dessus.

### DESCRIPTION DES FIGURES

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- Les figures 1a et 1b illustrent une architecture générale adaptée pour la mise en oeuvre d'un procédé d'authentification par jeton pour l'accès à un service à partir d'un terminal, selon un mode de réalisation particulier de l'invention ;
- La figure 2 illustre les principales étapes du procédé d'authentification par jeton pour l'accès à un service lors de la réception d'une requête comportant un identifiant unique du terminal, selon un mode de réalisation de la présente invention ;
- La figure 3 illustre les principales étapes du procédé d'authentification par jeton pour l'accès à un service lors de la réception d'une requête comportant un jeton et un identifiant unique du terminal, selon un mode de réalisation de la présente invention ;
- La figure 4 est un chronogramme illustrant les messages échangés entre un terminal et un serveur d'authentification mettant en oeuvre le procédé d'authentification par jeton selon un mode particulier de réalisation de l'invention.
- La figure 5 illustre l'architecture d'un dispositif mettant en oeuvre le procédé d'authentification par jeton selon un mode particulier de réalisation de l'invention.

### DESCRIPTION D'UN MODE PARTICULIER DE RÉALISATION

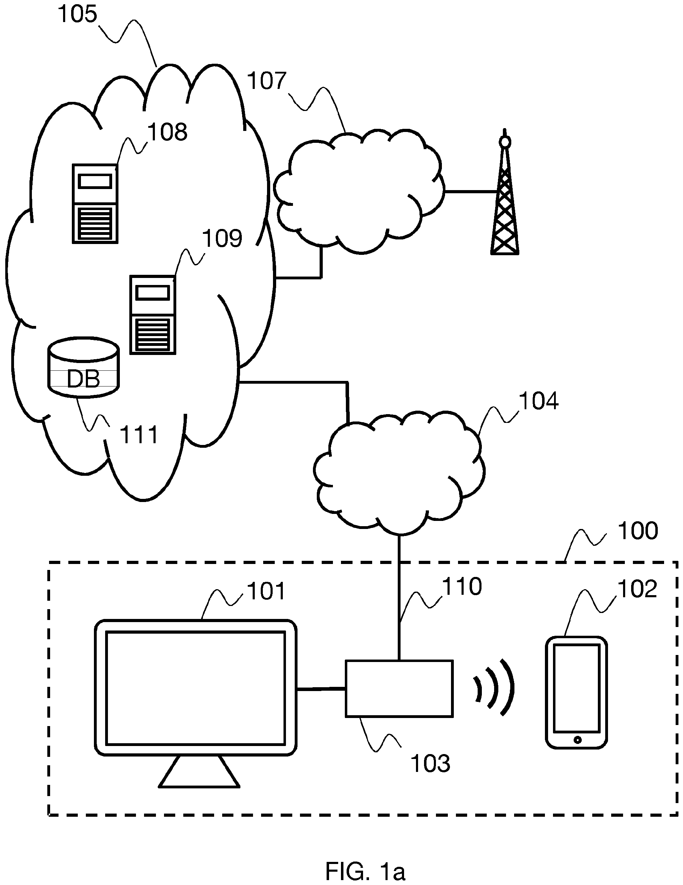

La figure 1a illustre une architecture générale adaptée pour la mise en oeuvre d'un procédé d'authentification par jeton selon un mode de réalisation de la présente invention ; toutefois, il n'échappera pas à l'homme du métier que des composants additionnels peuvent être présents ou que certains composants peuvent être regroupés dans une même entité ou à l'inverse répartis sur plusieurs entités.

Un environnement domestique 100 comprend un téléviseur connecté 101 et un terminal mobile 102, comme par exemple un smartphone, aptes à restituer des contenus audiovisuels diffusés sur un réseau de communication 105 par un fournisseur de contenu 108. L'environnement domestique comporte un point d'accès 103, par exemple un modem routeur ADSL auquel sont raccordés le téléviseur et le terminal mobile par un réseau local, par exemple un réseau de type Ethernet ou Wifi. Le point d'accès 103 permet la connexion du téléviseur et du terminal mobile au réseau de télécommunication 105 par l'intermédiaire d'un accès réseau 110 et d'un réseau d'accès 104. Le réseau de télécommunication comporte un serveur d'authentification 109 adapté pour la mise en oeuvre du procédé. En particulier, le serveur d'authentification 109 permet d'autoriser ou non la consultation des contenus numériques diffusés par le fournisseur de contenu 108 et peut accéder à une base de données 111. Il faut noter que cet environnement est donnée à titre d'exemple et que le serveur d'authentification 109 et le fournisseur de contenu peuvent tout à fait appartenir à des réseaux différents interconnectés par exemple.

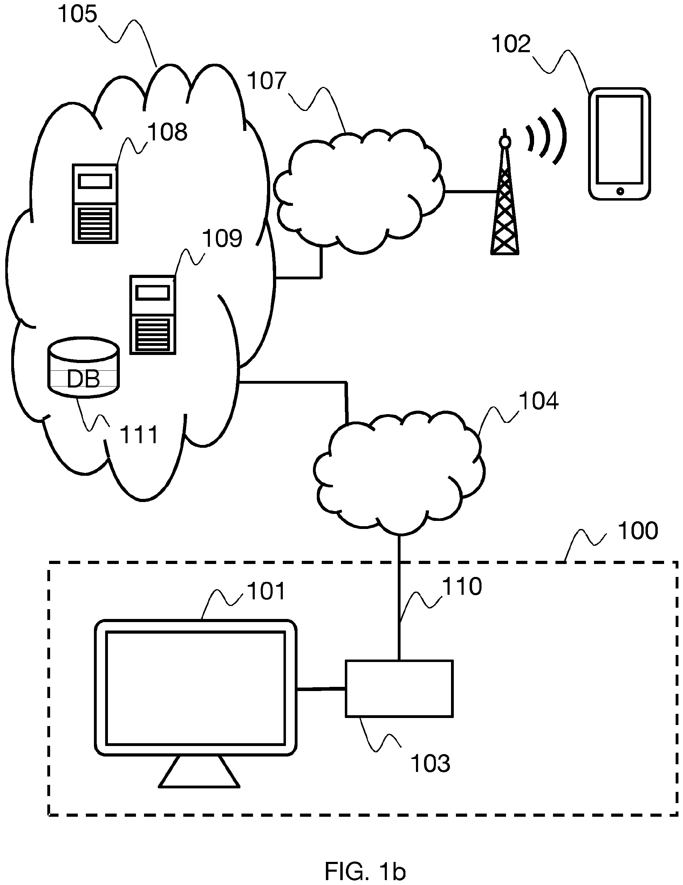

La figure 1b illustre le même environnement dans lequel le terminal mobile 102 est en situation de nomadisme, connecté au réseau de télécommunication 105 par l'intermédiaire d'un réseau d'accès sans fil 107, par exemple un point d'accès WIFI public ou un réseau cellulaire d'opérateur tiers. Nous considérerons dans la suite de cet exposé que le titulaire de l'accès réseau 110 à souscrit un abonnement pour la consultation des contenus numériques diffusés par le fournisseur de contenus 108.

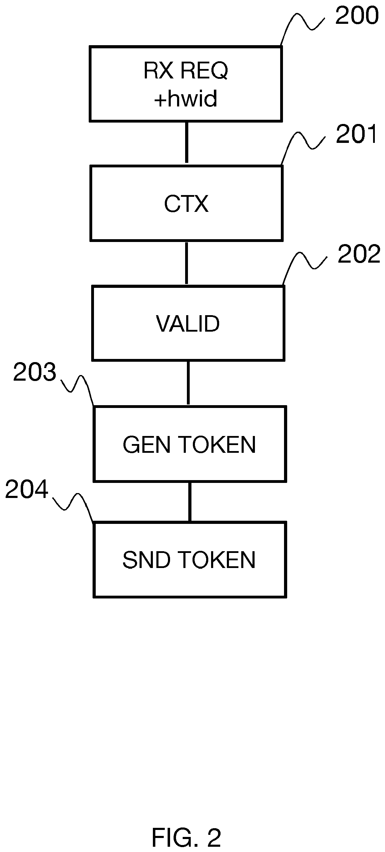

La figure 2 illustre les principales étapes du procédé d'authentification par jeton selon un mode de réalisation particulier.

Un terminal de l'environnement domestique, par exemple le téléviseur 101, peut demander à consulter un contenu numérique disponible auprès du fournisseur de contenu 108. Pour cela, le terminal émet une requête d'accès au service à destination du serveur d'authentification 109. La requête peut par exemple être émise suivant le protocole HTTP (HyperText Transfer Protocol) et transite par le point d'accès 103 et le réseau d'accès 104 avant d'atteindre le réseau de télécommunication 105.

La requête d'accès au service comprend au moins un identifiant unique du terminal. Cet identifiant est un identifiant unique du terminal obtenu par exemple à partir de certains éléments physiques le composant. Il peut par exemple s'agir d'une adresse MAC (Media Access Control), du numéro de série d'un composant matériel ou d'une combinaison de numéros de série de différents composants du terminal. De manière générale, tout identifiant obtenu ou généré à partir de caractéristiques matérielles et/ou permettant d'identifier de manière fiable et non ambiguë le terminal peut être utilisé.

Le serveur d'authentification 109 reçoit la requête d'accès au service comprenant un identifiant unique du terminal lors d'une étape 200.

Selon une étape 201, le serveur d'authentification détermine le contexte d'accès réseau du terminal ayant émis la requête. Pour cela, le serveur peut par exemple analyser la requête reçue afin de déterminer l'adresse IP source de la requête, c'est-à-dire l'adresse publique attribuée au point d'accès 103 utilisé par le terminal pour l'émission de cette requête. Les fournisseurs d'accès internet mémorisent généralement dans une base de données les associations entre les adresses IP attribuées et les titulaires associés. À partir de cette adresse IP, le serveur peut interroger une base de données 111 de façon à obtenir le type de l'accès réseau utilisé et en déduire le contexte d'accès réseau du terminal. Le serveur peut par exemple déterminer si la requête a été émise à partir d'un accès résidentiel, comme par exemple l'accès 110 de la figure 1a, ou encore depuis un accès nomade, comme par exemple depuis le réseau 107 de la figure 1b, ou encore depuis un accès public ou institutionnel.

Le serveur d'authentification peut ensuite, lors d'une étape 202, contrôler les droits d'accès au service depuis le terminal. En particulier, le procédé selon l'invention propose de vérifier si l'accès au service demandé par le terminal est autorisé en fonction du contexte d'accès au réseau déterminé lors de l'étape précédente. Par exemple, le serveur d'authentification peut consulter une base de données du fournisseur de contenu afin de vérifier si le titulaire de l'accès utilisé à bien souscrit au service demandé. Selon les modalités de la souscription au service, il peut aussi décider par exemple d'accorder l'accès au service en fonction du type de réseau d'accès utilisé pour émettre la requête.

À l'étape 203, si les droits d'accès ont effectivement été validés, le serveur d'authentification peut générer un jeton associé à l'identifiant unique du terminal et au contexte d'accès réseau. En revanche, lorsque les droits d'accès au service ne sont pas valide, une erreur peut être retournée au terminal. Il peut s'agir par exemple d'un code d'erreur accompagné ou non d'un message explicatif permettant au terminal d'informer l'utilisateur sur les raisons du rejet de la demande d'accès au service.

Selon un mode de réalisation particulier de l'invention, un nombre maximum de jetons peut être associé à un contexte d'accès réseau donné. Pour cela, le serveur peut mémoriser une association entre le jeton et le contexte d'accès réseau, par exemple dans une base de données 111 ou encore dans un fichier stocké sur le serveur, afin de comptabiliser et conserver une trace des jetons générés pour un contexte d'accès réseau donné. Il est ainsi possible de contrôler le nombre de jetons associés au contexte réseau et d'invalider les droits d'accès au service à l'étape 202 lorsqu'un nombre maximum de jetons valides est atteint. Le procédé selon l'invention permet ainsi de limiter le nombre de terminaux à partir desquels la consultation du contenu est autorisée.

En variante, le serveur peut aussi révoquer un jeton généré précédemment lorsque la génération d'un jeton est requise alors que le nombre maximum de jetons associé à un accès est atteint. La révocation d'un jeton peut consister en une suppression de sa référence dans une base de données, par exemple la base de données 111, permettant de comptabiliser les jetons ou en un marquage du jeton comme non valide dans la base de données par exemple. Ainsi, le nombre de terminaux autorisés à consulter le contenu reste constant. Le choix du jeton à révoquer peut se faire suivant différents critères. Par exemple, le serveur peut choisir de révoquer le jeton le moins utilisé ou le jeton le plus ancien. Le choix d'un jeton à révoquer peut aussi se faire en fonction du type de terminal auquel il est associé, de façon à ce que par exemple, des jetons associés à certains équipements ne puissent pas être révoqués, comme par exemple un équipement fixe de type télévision connectée ou set Top Box à partir desquels la consultation du contenu numérique peut devoir être toujours possible.

Le jeton généré à l'étape 203 peut ainsi être obtenu à partir d'un ensemble d'informations qui peut comprendre tout ou partie des éléments suivants :
- Identifiant du terminal ;
- Identifiant du contexte d'accès réseau ;

Une empreinte de cet ensemble d'informations ou d'un sous ensemble de ces informations (ou application d'une fonction de hachage « hash » à cet ensemble d'informations) peut alors être calculée par la mise en oeuvre d'un algorithme déterminé. Cette empreinte peut être ensuite chiffrée à l'aide d'une clé pour obtenir le jeton. L'algorithme prédéterminé peut par exemple être un algorithme SHA-1, pour « Secure Hash Algorithm ».

En variante, il est également possible de mettre en oeuvre une méthode combinant un calcul de l'empreinte à l'aide d'un algorithme cryptographique et l'utilisation d'une clé secrète, telle que HMAC pour « Hash-based Message Authentication Code ».

Lorsqu'un jeton a été généré, il est indiquée au terminal à l'étape 204. Par exemple, le jeton peut être inclus dans la réponse à la requête d'accès au service émise par le téléviseur 101 représenté sur les figures 1a et 1b. De cette façon, le téléviseur obtient un jeton d'accès au service qu'il peut inclure dans ses requêtes d'accès au contenu afin de prouver la validité de son droit d'accès.

L'environnement domestique 100 illustré sur la figure 1a comprend également un terminal mobile 102. Ce terminal est connecté au réseau de télécommunication 105 par l'intermédiaire du point d'accès résidentiel 103, et peut accéder, tout comme le téléviseur 101, aux contenus numériques diffusés par le fournisseur 108. Lors de la première demande d'accès au service du fournisseur 108 émise par le terminal 102, les étapes du procédé décrites précédemment s'appliquent et le terminal obtient un jeton généré à partir du contexte d'accès réseau et de l'identifiant unique caractérisant le terminal. Le serveur d'authentification 109 quant à lui dispose dans une mémoire, par exemple dans la base de données 111, des deux jetons associés au contexte d'accès réseau.

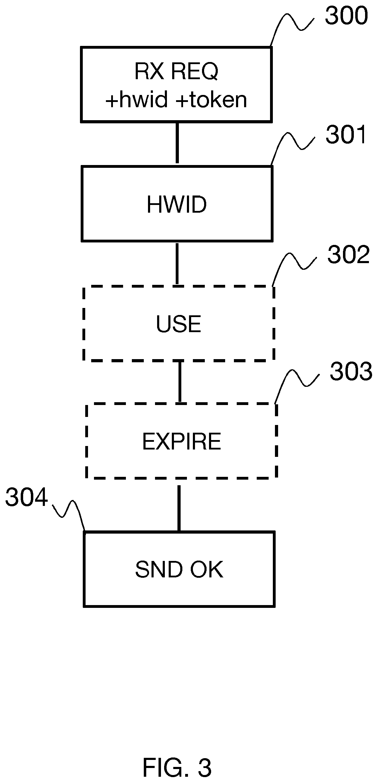

Considérons maintenant le même terminal mobile 102 représenté cette fois sur la figure 1b. Ce terminal dispose d'un jeton d'accès au service délivré lors d'une consultation depuis l'environnement domestique et se trouve maintenant en situation de nomadisme, connecté au réseau de télécommunication 105 par l'intermédiaire d'un réseau d'accès nomade 107, comme par exemple un point d'accès WIFI ou un réseau cellulaire d'un opérateur tiers. Le terminal 102 peut émettre une requête d'accès au service à destination du serveur d'authentification comprenant son identifiant unique et le jeton obtenu au préalable depuis l'accès réseau 110 de l'environnement domestique. Une telle requête est reçue par le serveur d'authentification 109 lors d'une l'étape 300 représentée sur la figure 3. Lors de cette étape, le serveur peut déchiffrer le jeton à l'aide de la clé utilisée pour le chiffrement de façon à obtenir l'empreinte réalisée à partir des informations utilisées lors de la génération du jeton, en particulier l'identifiant unique et par exemple le contexte d'accès réseau.

La figure 3 illustre les étapes du procédé à la réception d'une requête d'accès au service comprenant un identifiant unique du terminal demandeur d'un accès et un jeton tel que généré à l'étape 203 du procédé. Une telle requête peut être émise par un terminal qui a obtenu un jeton suite à une requête d'accès au service émise depuis un accès réseau autorisé. Il peut s'agir par exemple de l'accès internet résidentiel 110 illustré sur les figures 1a et 1b par exemple. À la réception d'une telle requête, le procédé propose de déchiffrer le jeton à l'aide de la clef utilisée lors du chiffrement afin d'en contrôler la validité.

À cet effet, le serveur d'authentification peut comparer lors d'une étape 301 l'identifiant unique fourni par le terminal dans la requête avec l'identifiant unique issu du déchiffrage du jeton. Si les deux identifiants concordent et que le jeton n'est pas marqué comme révoqué dans la base de données 111, c'est que le terminal peut être autorisé à consulter le contenu demandé.

À l'étape 302, selon un mode de réalisation particulier, le procédé selon l'invention propose d'effectuer un contrôle supplémentaire de manière à détecter une éventuelle pratique frauduleuse qui consisterait à capturer une requête d'autorisation d'accès envoyée par un terminal autorisé afin de la réémettre à partir d'un terminal non autorisé à partir duquel on souhaiterait malgré tout accéder au service. Afin d'éviter un tel « rejeu » de la requête, le procédé selon l'invention propose de comptabiliser le nombre d'utilisation du jeton et d'en mémoriser la valeur à la fois sur le serveur d'authentification ou dans la base de données 111 et dans le jeton lui-même de façon à ce qu'à chaque fois que le jeton est validé par le serveur d'authentification, les deux compteurs soient incrémentés. Après incrément du compteur du jeton, le jeton ainsi modifié est indiqué au terminal. De cette façon, lors de la présentation d'un jeton pour validation, le serveur d'authentification peut comparer la valeur des deux compteurs et établir la validité du jeton lorsque les compteurs ont des valeurs identiques.

Afin d'éviter une autre pratique frauduleuse qui consisterait à céder à un tiers n'ayant pas souscrit au service une autorisation d'accès à partir d'un terminal, le procédé propose de contrôler lors d'une étape 303 la durée de validité du jeton. Selon ce mode particulier de réalisation, une date de fin de validité peut être associée au jeton lors de sa génération. Cette date peut par exemple être mémorisée dans le jeton lui-même ou encore dans la base de données 111 en correspondance avec le jeton. Lors du contrôle de la validité du jeton, si la date d'expiration est dépassée, le jeton peut être révoqué. Lors d'une demande d'accès au service émise par un terminal à partir d'un accès réseau autorisé, comme par exemple l'accès 110 de l'environnement domestique 100 représenté sur la figure 1a et 1b, la date d'expiration du jeton peut être renouvelée.

Enfin, un accès au service peut être accordé à l'étape 304 lorsque le jeton a été validé. Pour cela, le serveur d'authentification peut envoyer une réponse au terminal comportant par exemple une URL d'accès au service demandé ou tout autre moyen de mise en relation avec le fournisseur de contenu sollicité. Le jeton peut en outre être indiqué de nouveau au terminal, en particulier s'il a été modifié aux étapes 302 ou 303, de façon à ce que le terminal puisse présenter le jeton modifié lors de l'envoi de requêtes subséquentes.

Ainsi, selon un mode de réalisation particulier, le jeton généré à l'étape 203 peut être obtenu à partir d'un ensemble d'informations qui peut comprendre tout ou partie des éléments suivants :
- Identifiant du terminal ;
- Identifiant du contexte d'accès réseau ;
- Durée de validité du jeton ;
- Compteur d'utilisations du jeton.

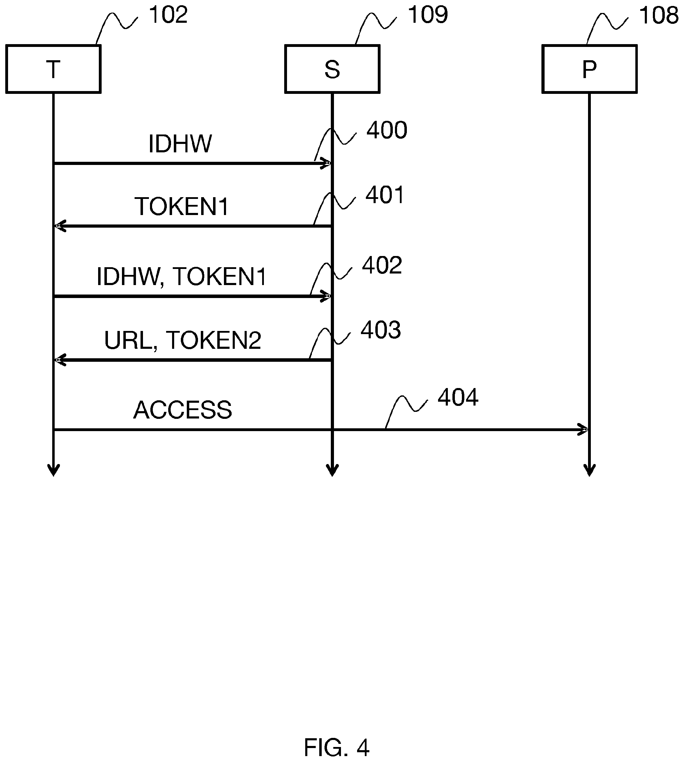

La figure 4 illustre des messages pouvant être échangés entre un terminal 102, un fournisseur de contenus numériques 108 et un serveur d'authentification 109 mettant en oeuvre le procédé d'authentification par jeton selon un mode particulier de réalisation de l'invention.

Une première requête d'accès au service 400 comprenant un identifiant unique (IDHW) peut être envoyé depuis le terminal 102 ne disposant pas de jeton vers le serveur d'authentification 109. Il peut s'agir par exemple d'une requête http comportant l'identifiant du terminal dans un champ de l'entête http par exemple. Lors de l'étape 204 décrite en référence à la figure 2, un message 401 comportant un jeton (TOKEN1) est envoyée au terminal. Ce message peut correspondre à une réponse à la requête http 400 dans laquelle le jeton peut être indiqué au terminal au moyen d'un cookie http ou d'un champ dédié dans le corps ou l'entête de la réponse.

Lorsqu'il dispose d'un jeton, le terminal 102 peut émettre une requête d'accès au service 402 comprenant un identifiant unique (IDHW) et le jeton (TOKEN1) obtenu via le message 401. Il peut également s'agir par exemple d'une requête http. Lors de l'étape 304 décrite en référence à la figure 3, le serveur 109 peut envoyer un message de réponse 403 comportant par exemple une URL d'accès au fournisseur de contenu et le jeton, éventuellement mis à jour (TOKEN2).

Enfin, le terminal peut accéder au fournisseur de contenu 108 au moyen d'un message 404 et de l'URL fournie dans la réponse 403. Selon un mode de réalisation particulier dans lequel le fournisseur de contenu est adapté pour valider le jeton selon les étapes du procédé, la requête d'accès au service 402 peut être émise directement à destination du fournisseur de contenu. Selon un autre mode de réalisation, l'accès peut également être obtenu via un lien direct entre le serveur d'authentification et le fournisseur de contenu.

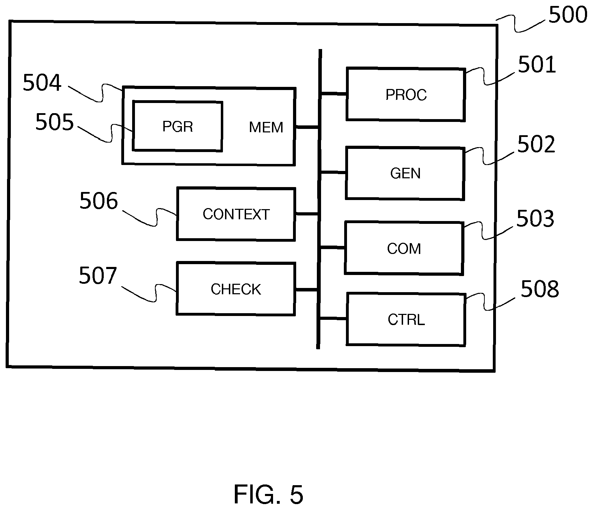

La figure 5 illustre l'architecture d'un dispositif d'authentification par jeton 500 mettant en oeuvre le procédé d'authentification par jeton selon un mode de réalisation de l'invention. Le dispositif comprend un espace de stockage 504, par exemple une mémoire MEM, une unité de traitement 501 équipée par exemple d'un processeur PROC. L'unité de traitement peut être pilotée par un programme 505, par exemple un programme d'ordinateur PGR, mettant en oeuvre le procédé d'authentification par jeton tel que décrit dans l'invention en référence aux figures 2 et 3, et notamment les étapes de détermination d'un contexte d'accès au réseau d'un terminal (201), de contrôle de la validité des droits d'accès au service, comportant au moins une vérification de droit d'accès associé au contexte d'accès au réseau du terminal (202), de génération d'un jeton d'authentification valide à partir de l'identifiant unique du terminal et du contexte d'accès au réseau (203), de transmission du jeton vers le terminal (204) et contrôle de la validité d'un jeton (301, 302, 303).

À l'initialisation, les instructions du programme d'ordinateur 505 sont par exemple chargées dans une mémoire RAM (Random Access Memory) avant d'être exécutées par le processeur de l'unité de traitement 501. Le processeur de l'unité de traitement 501 met en oeuvre les étapes du procédé selon les instructions du programme d'ordinateur 505.

Pour cela, le dispositif comprend, outre la mémoire 504, des moyens de détermination d'un contexte d'accès réseau 506 à partir d'une requête d'autorisation d'accès au service, de contrôle de la validité des droits d'accès au service 507, de génération d'un jeton valide 502 à partir d'un identifiant unique et d'un contexte réseau et de contrôle de la validité d'un jeton 508. Le dispositif comprend en outre des moyens de communications 503, comme par exemple une interface réseau, adaptés pour l'envoi et la réception de messages, et en particulier pour la réception de requêtes d'accès au service et l'envoi des réponses correspondantes.

Selon un mode de réalisation, le dispositif peut être intégré dans un équipement de type serveur.

## Revendications

1. Procédé d'authentification par jeton pour l'accès à un service à partir d'un terminal, **caractérisé en ce qu'**il comporte, à la réception par un dispositif d'authentification (500) d'une requête d'autorisation d'accès au service comprenant au moins un identifiant unique du terminal, les étapes suivantes :
- Détermination (201) d'un contexte d'accès au réseau du terminal, ledit contexte d'accès se rapportant à une donnée relative au réseau d'accès utilisé par le terminal, la donnée étant adaptée pour identifier un utilisateur associé à l'accès,
- Contrôle (202) de la validité des droits d'accès au service, comportant au moins une vérification de droit d'accès associé au contexte d'accès au réseau du terminal, et de:
- Détermination d'un nombre de jetons valides associés au contexte d'accès réseau,
- Comparaison du nombre de jetons associés au contexte d'accès réseau avec un nombre maximum prédéterminé de jetons, et
- Détermination de la validité des droits en fonction du résultat de la comparaison, et
En cas de validité des droits d'accès :
- Génération (203) d'un jeton d'authentification valide à partir de l'identifiant unique du terminal et du contexte d'accès au réseau, et
- Transmission (204) du jeton du dispositif d'authentification (500) vers le terminal.

2. Procédé selon la revendication 1, **caractérisé en ce qu'**il comporte en outre, lors du contrôle de la validité des droits d'accès au service et lorsque le nombre de jetons valides associés au contexte d'accès réseau est supérieur au nombre maximum prédéterminé de jetons, une étape de révocation d'au moins un jeton valide.

3. Procédé selon la revendication 2 **caractérisé en ce que**, lorsque le nombre de révocations dans une fenêtre temporelle prédéterminée est supérieur à un seuil prédéterminé :
- l'étape de révocation du jeton n'est pas effectuée, et
- les droits d'accès au service pour le terminal sont invalidés.

4. Procédé selon l'une quelconque des revendications 1 à 3 **caractérisé en ce que**, à la réception d'une requête d'accès à un service comportant un premier identifiant unique du terminal et un jeton d'authentification associé à un second identifiant unique du terminal, le procédé comporte en outre les étapes suivantes :
- Comparaison du premier et du second identifiant unique du terminal,
- Détermination de la validité du jeton en fonction du résultat de la comparaison, et
- Autorisation d'accès au service demandé en cas de validité du jeton.

5. Procédé selon la revendication 4 **caractérisé en ce que** la détermination de la validité du jeton comprend en outre une vérification que la date de génération du jeton est comprise dans une fenêtre temporelle prédéterminée.

6. Procédé selon l'une quelconque des revendications 4 à 5 **caractérisé en ce qu'**il comporte en outre, lors de la détermination de la validité du jeton, les étapes suivantes :
- Comparaison d'un nombre d'autorisations accordées compris dans le jeton et d'un nombre d'autorisations accordées associé au jeton,
- Détermination de la validité du jeton en fonction du résultat de la comparaison, et
En cas de validité du jeton :
- Mise à jour du nombre d'autorisations accordées associé au jeton,
- Mise à jour du nombre d'autorisations accordées compris dans le jeton, et
- Transmission du jeton mis à jour au terminal.

7. Procédé selon la revendication 1 **caractérisé en ce que** l'étape de détermination d'un contexte d'accès au réseau du terminal comporte une étape d'identification d'un titulaire de l'accès réseau utilisé par le terminal.

8. Dispositif d'authentification par jeton pour l'accès à un service à partir d'un terminal, **caractérisé en ce qu'**il comprend des moyens de :
- Réception (503) d'une requête d'autorisation d'accès au service comprenant au moins un identifiant unique du terminal,
- Détermination (506) d'un contexte d'accès au réseau du terminal, ledit contexte d'accès se rapportant à une donnée relative au réseau d'accès utilisé par le terminal, la donnée étant adaptée pour identifier un utilisateur associé à l'accès
- Contrôle (507) de la validité des droits d'accès au service, comportant au moins des moyens de vérification de droit d'accès associé au contexte d'accès au réseau du terminal, et de:
- Détermination d'un nombre de jetons valides associés au contexte d'accès réseau,
- Comparaison du nombre de jetons associés au contexte d'accès réseau avec un nombre maximum prédéterminé de jetons, et
- Détermination de la validité des droits en fonction du résultat de la comparaison, et
- Génération (502) d'un jeton d'authentification valide à partir de l'identifiant unique du terminal et du contexte d'accès au réseau, et
- Transmission (503) du jeton vers le terminal.

9. Serveur **caractérisé en ce qu'**il comprend un dispositif selon la revendication 8.

10. Programme d'ordinateur comportant les instructions pour l'exécution du procédé selon l'une quelconque des revendications 1 à 7, lorsque le programme est exécuté par un processeur.

11. Support d'informations lisible par un ordinateur sur lequel est enregistré un programme d'ordinateur comprenant des instructions pour l'exécution des étapes du procédé d'authentification par jeton selon l'une quelconque des revendications 1 à 7.

12. Procédé d'accès à un service **caractérisé en ce qu'**il comporte les étapes suivantes, mises en oeuvre par un terminal de communication (102)
- Obtention d'un identifiant unique du terminal,
- Émission (400) d'une requête d'accès au service comprenant l'identifiant unique,
- Réception (401), lorsque la requête d'accès au service est émise à partir d'un accès réseau autorisé, d'un jeton d'authentification généré à partir de l'identifiant unique du terminal et d'un contexte d'accès au réseau se rapportant à une donnée relative au réseau d'accès utilisé par le terminal, la donnée étant adaptée pour identifier un utilisateur associé à l'accès, et
- Émission (402) d'une requête d'accès au service comprenant l'identifiant unique du terminal et le jeton d'authentification.

## Patentansprüche

1. Tokenbasiertes Authentifizierungsverfahren für den Zugriff auf einen Dienst von einem Endgerät aus, **dadurch gekennzeichnet, dass** es bei Empfang, durch eine Authentifizierungsvorrichtung (500), einer Autorisierungsanfrage nach Zugriff auf den Dienst, die mindestens eine eindeutige Kennung des Endgeräts beinhaltet, die folgenden Schritte umfasst:
- Bestimmen (201) eines Netzwerkzugriffskontexts des Endgeräts, wobei sich der Zugriffskontext auf eine Angabe über das von dem Endgerät verwendete Zugriffsnetzwerk bezieht, wobei die Angabe dazu angepasst ist, einen mit dem Zugriff assoziierten Benutzer zu identifizieren,
- Kontrollieren (202) der Gültigkeit der Zugriffsrechte auf den Dienst, umfassend mindestens eine Überprüfung eines Zugriffsrechts, das mit dem Netzwerkzugriffskontext des Endgeräts assoziiert ist, und:
- Bestimmen einer Anzahl von gültigen Tokens, die mit dem Netzwerkzugriffskontext assoziiert sind,
- Vergleichen der Anzahl von mit dem Netzwerkzugriffskontext assoziierten Tokens mit einer vorbestimmten maximalen Anzahl von Tokens und
- Bestimmen der Gültigkeit der Rechte in Abhängigkeit von dem Ergebnis des Vergleichs, und wenn die Zugriffsrechte gültig sind:
- Generieren (203) eines gültigen Authentifizierungstokens anhand der eindeutigen Kennung des Endgeräts und des Netzwerkzugriffskontexts und
- Übertragen (204) des Tokens von der Authentifizierungsvorrichtung (500) an das Endgerät.

2. Verfahren nach Anspruch 1, **dadurch gekennzeichnet, dass** es ferner während der Kontrolle der Gültigkeit der Zugriffsrechte auf den Dienst, und wenn die Anzahl von gültigen Tokens, die mit dem Netzwerkzugriffskontext assoziiert sind, größer als die vorbestimmte maximale Anzahl von Tokens ist, einen Schritt des Rückrufs mindestens eines gültigen Tokens umfasst.

3. Verfahren nach Anspruch 2, **dadurch gekennzeichnet, dass**, wenn die Anzahl von Rückrufen in einem vorbestimmten Zeitfenster größer als ein vorbestimmter Schwellenwert ist:
- der Schritt des Rückrufens des Tokens nicht durchgeführt wird und
- die Zugriffsrechte auf den Dienst für das Endgerät für ungültig erklärt werden.

4. Verfahren nach einem beliebigen der Ansprüche 1 bis 3, **dadurch gekennzeichnet, dass** bei Empfang einer Anfrage nach Zugriff auf einen Dienst, die eine erste eindeutige Kennung des Endgeräts und einen Authentifizierungstoken, der mit einer zweiten eindeutigen Kennung des Endgeräts assoziiert ist, umfasst, das Verfahren ferner die folgenden Schritte umfasst:
- Vergleichen der ersten und der zweiten eindeutigen Kennung des Endgeräts,
- Bestimmen der Gültigkeit des Tokens in Abhängigkeit von dem Ergebnis des Vergleichs und
- Autorisieren des Zugriffs auf den angefragten Dienst, wenn der Token gültig ist.

5. Verfahren nach Anspruch 4, **dadurch gekennzeichnet, dass** das Bestimmen der Gültigkeit des Tokens ferner eine Überprüfung beinhaltet, dass sich das Generierungsdatum des Tokens innerhalb eines vorbestimmten Zeitfensters befindet.

6. Verfahren nach einem beliebigen der Ansprüche 4 bis 5, **dadurch gekennzeichnet, dass** es ferner während des Bestimmens der Gültigkeit des Tokens die folgenden Schritte umfasst:
- Vergleichen einer Anzahl von gewährten Autorisierungen, die in dem Token enthalten ist, und einer Anzahl von gewährten Autorisierungen, die mit dem Token assoziiert ist,
- Bestimmen der Gültigkeit des Tokens in Abhängigkeit von dem Ergebnis des Vergleichs, und
wenn der Token gültig ist:
- Aktualisieren der Anzahl von gewährten Autorisierungen, die mit dem Token assoziiert ist,
- Aktualisieren der Anzahl von gewährten Autorisierungen, die in dem Token enthalten ist, und
- Übertragen des aktualisierten Tokens an das Endgerät.

7. Verfahren nach Anspruch 1, **dadurch gekennzeichnet, dass** der Schritt des Bestimmens eines Netzwerkzugriffskontexts des Endgeräts einen Schritt des Identifizierens eines Inhabers des von dem Endgerät verwendeten Netzwerkzugriffs umfasst.

8. Tokenbasierte Authentifizierungsvorrichtung für den Zugriff auf einen Dienst von einem Endgerät aus, **dadurch gekennzeichnet, dass** sie Mittel für Folgendes beinhaltet:
- Empfangen (503) einer Autorisierungsanfrage nach Zugriff auf den Dienst, die mindestens eine eindeutige Kennung des Endgeräts beinhaltet,
- Bestimmen (506) eines Netzwerkzugriffskontexts des Endgeräts, wobei sich der Zugriffskontext auf eine Angabe über das von dem Endgerät verwendete Zugriffsnetzwerk bezieht, wobei die Angabe dazu angepasst ist, einen mit dem Zugriff assoziierten Benutzer zu identifizieren,
- Kontrollieren (507) der Gültigkeit der Zugriffsrechte auf den Dienst, umfassend mindestens Mittel zur Überprüfung eines Zugriffsrechts, das mit dem Netzwerkzugriffskontext des Endgeräts assoziiert ist, und:
- Bestimmen einer Anzahl von gültigen Tokens, die mit dem Netzwerkzugriffskontext assoziiert sind,
- Vergleichen der Anzahl von mit dem Netzwerkzugriffskontext assoziierten Tokens mit einer vorbestimmten maximalen Anzahl von Tokens und
- Bestimmen der Gültigkeit der Rechte in Abhängigkeit von dem Ergebnis des Vergleichs und
- Generieren (502) eines gültigen Authentifizierungstokens anhand der eindeutigen Kennung des Endgeräts und des Netzwerkzugriffskontexts und
- Übertragen (503) des Tokens an das Endgerät.

9. Server, **dadurch gekennzeichnet, dass** er eine Vorrichtung nach Anspruch 8 beinhaltet.

10. Computerprogramm, das die Anweisungen umfasst, die bei der Ausführung des Programms durch einen Prozessor das Verfahren nach einem beliebigen der Ansprüche 1 bis 7 ausführen.

11. Computerlesbares Informationsmedium, auf dem ein Computerprogramm gespeichert ist, das Anweisungen zur Ausführung der Schritte des tokenbasierten Authentifizierungsverfahrens nach einem beliebigen der Ansprüche 1 bis 7 beinhaltet.

12. Verfahren für den Zugriff auf einen Dienst, **dadurch gekennzeichnet, dass** es die folgenden Schritte umfasst, die durch ein Kommunikationsendgerät (102) umgesetzt werden:
- Erhalten einer eindeutigen Kennung des Endgeräts,
- Senden (400) einer Anfrage nach Zugriff auf den Dienst, die die eindeutige Kennung beinhaltet,
- Empfangen (401), wenn die Anfrage nach Zugriff auf den Dienst von einem autorisierten Netzwerkzugriff aus gesendet wird, eines Authentifizierungstokens, der anhand der eindeutigen Kennung des Endgeräts und eines Netzwerkzugriffskontexts, der sich auf eine Angabe über das von dem Endgerät verwendete Zugriffsnetzwerk bezieht, generiert wird, wobei die Angabe dazu angepasst ist, einen mit dem Zugriff assoziierten Benutzer zu identifizieren, und
- Senden (402) einer Anfrage nach Zugriff auf den Dienst, die die eindeutige Kennung des Endgeräts und den Authentifizierungstoken beinhaltet.

## Claims

1. Token-based authenticating method for controlling access to a service from a terminal, **characterized in that** it comprises, on receipt by an authenticating device (500) of a request for permission to access the service containing at least one unique identifier of the terminal, the following steps:
- determining (201) a network access context of the terminal, said access context relating to a datum regarding the access network used by the terminal, the datum being configured to identify a user associated with the access,
- checking (202) the validity of rights to access the service, comprising at least one verification of access rights associated with the network access context of the terminal, and:
- determining a number of valid tokens associated with the network access context,
- comparing the number of tokens associated with the network access context to a predetermined maximum number of tokens, and
- determining the validity of the rights depending on the result of the comparison, and
if the access rights are valid:
- generating (203) a valid authentication token based on the unique identifier of the terminal and on the network access context, and
- transmitting (204) the token from the authenticating device (500) to the terminal.

2. Method according to Claim 1, **characterized in that** it further comprises, when checking the validity of the rights to access the service and when the number of valid tokens associated with the network access context is greater than the predetermined maximum number of tokens, a step of revoking at least one valid token.

3. Method according to Claim 2, **characterized in that**, when the number of revocations in a predetermined time window is greater than a predetermined threshold:
- the token-revoking step is not performed, and
- the rights to access the service are invalidated for the terminal.

4. Method according to any one of Claims 1 to 3, **characterized in that**, on receipt of a request to access a service containing a first unique identifier of the terminal and an authentication token associated with a second unique identifier of the terminal, the method further comprises the following steps:
- comparing the first and second unique identifiers of the terminal,
- determining the validity of the token depending on the result of the comparison, and
- permitting access to the requested service if the token is valid.

5. Method according to Claim 4, **characterized in that** determining the validity of the token further comprises verifying that the date of generation of the token is comprised in a predetermined time window.

6. Method according to either one of Claims 4 and 5, **characterized in that** it further comprises, when determining the validity of the token, the following steps:
- comparing a number of granted permissions contained in the token and a number of granted permissions associated with the token,
- determining the validity of the token depending on the result of the comparison, and
if the token is valid:
- updating the number of granted permissions associated with the token,
- updating the number of granted permissions contained in the token, and
- transmitting the updated token to the terminal.

7. Method according to Claim 1, **characterized in that** the step of determining a network access context of the terminal comprises a step of identifying an owner of the network access used by the terminal.

8. Token-based authenticating device for controlling access to a service from a terminal, **characterized in that** it comprises means for:
- receiving (503) a request for permission to access the service containing at least one unique identifier of the terminal,
- determining (506) a network access context of the terminal, said access context relating to a datum regarding the access network used by the terminal, the datum being configured to identify a user associated with the access,
- checking (507) the validity of rights to access the service, comprising at least means for verifying access rights associated with the network access context of the terminal, and for:
- determining a number of valid tokens associated with the network access context,
- comparing the number of tokens associated with the network access context to a predetermined maximum number of tokens, and
- determining the validity of the rights depending on the result of the comparison, and
- generating (502) a valid authentication token based on the unique identifier of the terminal and on the network access context, and
- transmitting (503) the token to the terminal.

9. Server, **characterized in that** it comprises a device according to Claim 8.

10. Computer program comprising instructions for executing the method according to any one of Claims 1 to 7, when the program is executed by a processor.

11. Computer-readable data medium on which is stored a computer program comprising instructions for executing the steps of the token-based authenticating method according to any one of Claims 1 to 7.

12. Method for accessing a service, **characterized in that** it comprises the following steps, implemented by a communication terminal (102):
- obtaining a unique identifier of the terminal,
- sending (400) a request to access the service containing the unique identifier,
- receiving (401), when the request to access the service is sent from a permitted network access, an authentication token generated from the unique identifier of the terminal and from a network access context relating to a datum regarding the access network used by the terminal, the datum being configured to identify a user associated with the access, and
- sending (402) a request to access the service containing the unique identifier of the terminal and the authentication token.
